# EUROPÄISCHE PATENTANMELDUNG

(11) **EP 1 564 391 A2**
(43) Veröffentlichungstag der Anmeldung: **17.08.2005**
(21) Anmeldenummer: 05100718.5
(22) Anmeldetag: 02.02.2005
(51) Int. Cl.: F02C 6/16

(54) **Kraftwerksanlage**

(30) Priorität: 13.02.2004 DE 102004007482
(71) Anmelder: ALSTOM Technology Ltd, 5400 Baden (CH)
(72) Erfinder: Althaus, Rolf, 9230, Flawil (CH); Koller, Martin, 5400, Baden (CH)

(57) **Zusammenfassung**

Eine Luftspeicher-Kraftwerksanlage umfasst einen ersten Wellenstrang (1) und einen zweiten Wellenstrang (2). Auf dem ersten Wellenstrang (1) sind eine Gasturbogruppe (11), eine elektrische Maschine (12), und ein Kompressor (13) angeordnet. Zwischen der elektrischen Maschine und der Gasturbogruppe respektive dem Kompressor sind schaltbare Kupplungselemente (14, 15) angeordnet. Die Kupplungselemente ermöglichen es, wahlweise eine Verbindung zwischen der elektrischen Maschine und der Gasturbogruppe (11) oder dem Kompressor (13) herzustellen. Auf dem zweiten Wellenstrang (2) sind eine Entspannungsmaschine (21) zur arbeitsleistenden Entspannung eines Druckspeicherfluides, eine elektrische Maschine (22) sowie ein Kompressor (23) angeordnet. Zwischen der elektrischen Maschine und der Entspannungsmaschine respektive dem Kompressor sind schaltbare Kupplungselemente (24, 25) angeordnet, welche es ermöglichen, die elektrische Maschine wahlweise mit der Entspannungsmaschine und dem Kompressor zu verbinden. Die elektrischen Maschinen sind dabei sowohl generatorisch als auch elektromotorisch betreibbar.

## Beschreibung

### Technisches Gebiet

Die vorliegende Erfindung betrifft eine Kraftwerksanlage gemäss dem Oberbegriff des Patentanspruch 1.

### Stand der Technik

Druckspeicherkraftwerksanlagen sind im Stand der Technik beispielsweise in der US 2003/0131599 oder der US 5,537,822 bekanntgeworden. Die Speicherung des Speicherfluids erfolgt im Allgemeinen bei Drücken von über 50 bar, insbesondere über 100 bar, schon, um in den vorhandenen Speichervolumina möglichst viel Energie speichern zu können. Die US 5,537,822 offenbart dabei auch Kraftwerksanlagen, bei denen ein Verdichter und eine Entspannungsmaschine gemeinsam mit einer sowohl elektromotorisch als auch generatorisch betreibbaren elektrischen Maschine auf einem gemeinsamen Wellenstrang angeordnet sind. Weiterhin offenbart die US 5,537,822 Kraftwerksanlagen, bei denen neben einer einwelligen Luftspeicheranordnung eine Gasturbogruppe angeordnet ist. Eine derartige Anordnung kann als nachteilig betrachtet werden, weil beispielsweise jeweils die gesamte Kompressorleistung betrieben werden muss. Im Ladebetrieb der Luftspeicheranlage zeigt sich daher ein geringer Grad an Flexibilität. Weiterhin muss sowohl auf dem Wellenstrang der Luftspeicheranordnung als auch auf den Wellenstrang der Gasturbogruppe eine elektrische Maschine angeordnet sein. Die elektrische Maschine, welche auf dem Wellenstrang der Luftspeicheranordnung angeordnet ist, muss für die maximale Leistung der Entspannungsmaschine und der Kompressoren ausgelegt sein. Die elektrische Maschine der Gasturbogruppe wird hingegen im Ladebetrieb der Luftspeicheranlage nicht genutzt. Unter der Maßgabe, dass die Verdichterleistung größer ist als die Leistung der Entspannungsmaschine, muss die elektrische Maschine der Luftspeicheranordnung grösser bemessen sein, als dies für den Leistungsbetrieb notwendig wäre. Im Gegenzug bleibt die elektrische Maschine der Abgasturbogruppe im Ladebetrieb, in dem das Luftspeichervolumen mit Druckspeicherfluid aufgeladen wird, ungenutzt. In der Folge resultiert einerseits die Notwendigkeit, eine elektrische Maschine zu überdimensionieren, während auf der anderen Seite eine andere elektrische Maschine zeitweise ungenutzt bleibt.

Zudem hat sich gezeigt, dass bei Druckverhältnissen, welche über 50 oder gar über 100 liegen, Verdichter und/oder auf einem Wellenstrang angeordnete Verdichtereinheiten mit hohen Leistungen, welche über rund 120 MW liegen, erhebliche Probleme aufwerfen. Nach dem Stand der Technik sind Turboverdichter für die genannten Druckverhältnisse daher nur bis zu Einheitenleistungen von rund 100 bis 120 MW auf dem Markt. Weiterhin zeigt sich, dass zum Anfahren von Verdichtern einer derartigen Leistungsklasse bis zur Nenndrehzahl Anfahrvorrichtungen, beispielsweise statische Frequenzumrichter, mit ebenfalls sehr hohen Leistungen erforderlich sind, welche nur sehr aufwändig realisiert werden können. Es ist daher im Stand der Technik weiterhin bekannt, Kompressoren und/oder Kompressoreneinheiten kleinerer Leistungen jeweils getrennt anzuordnen. Dies bedeutet jedoch eine Vielzahl von Komponenten, wodurch eine derartige Kraftwerksanlage teuer und aufwändig, daneben auch mit einem großen Platzbedarf, zu realisieren ist.

Zusammenfassend bleibt also festzustellen, dass bei Anordnungen nach dem Stand der Technik Ressourcen und damit auch eingesetztes Kapital nur unbefriedigend genutzt werden, und die Anordnung der Komponenten der Luftspeicheranlage nur eine ungenügende Betriebsflexibilität ermöglicht.

### Darstellung der Erfindung

Es ist daher eine Aufgabe der vorliegenden Erfindung, eine Kraftwerksanlage der eingangs genannten Art anzugeben, welche die Nachteile des Standes der Technik vermeidet. Es ist insbesondere eine Aufgabe der Erfindung, eine derartige Kraftwerksanlage so anzugeben, dass eine maximale Flexibilität des Betriebes ermöglicht wird. Gemäss einem weiteren Aspekt der Erfindung soll eine Kraftwerksanlage angegeben werden, welche mit einer geringen Anzahl von Wellensträngen auskommt. Dabei soll auch berücksichtigt werden, dass einfach zu realisierende und möglichst auf dem Markt erhältliche Kompressoren und Kraftmaschinen verwendet werden können. Gemäss noch einem Aspekt der Erfindung soll eine derartige Kraftwerksanlage angegeben werden, deren gesamte Kompressorleistung im Ladebetrieb über 100 MW, insbesondere über 120 MW, beispielsweise im Bereich von 150 MW bis 200 MW liegt.

Kern der Erfindung ist es daher, die Kompressorleistung aufzuteilen und in einer Kraftwerksanlage zwei Wellenstränge anzuordnen, von denen jeder eine elektrische Maschine sowie wenigstens einen Kompressor trägt, wobei weiterhin ein erster Wellenstrang eine Gasturbogruppe trägt, und auf einem zweiten Wellenstrang eine Entspannungsmaschine zur arbeitsleistenden Entspannung eines Speicherfluides angeordnet ist.

Unter einem Kompressor ist im Rahmen der vorliegenden Offenbarung nicht nur ein einzelner Kompressor zu verstehen, sondern allgemein auf einem Wellenstrang angeordnete Kompressoreinheiten. Ohne weiteres kann es sich hier um mehrere strömungsmässig in Reihe geschaltete Kompressoren mit Zwischenkühlern handeln. Beispielsweise kann ein Kompressor im Sinne der verwendeten Nomenklatur einen Niederdruckkompressor umfassen, welcher mit einem zwischengeschalteten Kühler in einen Mitteldruckkompressor fördert, welcher wiederum über einen zwischengeschalteten Kühler in einen Hochdruckkompressor fördert. Dabei sind der Niederdruckkompressor, der Mitteldruckkompressor und der Hochdruckkompressor auf einem Wellenstrang angeordnet. Ein Wellenstrang bedeutet hierbei nicht zwingend, dass der Niederdruckkompressor, der Mitteldruckkompressor und der Hochdruckkompressor auf einer gemeinsamen starr gekoppelten Welle angeordnet sein müssen. Zwischen den einzelnen Teilkompressoren können ganz im Gegenteil auch Getriebeeinheiten angeordnet sein. Diese sind häufig notwendig, weil beispielsweise der Betrieb eines Hochdruckkompressors im Allgemeinen bei den vorliegenden Druckverhältnissen eine höhere Drehzahl erfordert als der Betrieb eines Niederdruckkompressors. Der Begriff Wellenstrang umfasst daher im Rahmen der vorliegenden Offenbarung allgemein auch mehrere Wellen, welche mittels Getrieben verbunden sind. Dies ermöglicht es, im Rahmen der vorliegenden Erfindung Gasturbogruppen, Entspannungsmaschinen, und Kompressoren zu verwendeten, deren Nenndrehzahl von der netzsynchronen Drehzahl der elektrischen Maschinen verschiedenen ist.

In einer bevorzugten Ausführungsform sind die Kompressoren, die Entspannungsmaschine, und die Gasturbogruppe jeweils an einem Ende eines Wellenstrangs angeordnet. Jeweils zwischen einem Kompressor und der Gasturbogruppe respektive zwischen einem Kompressor und der Entspannungsmaschine ist eine elektrische Maschine angeordnet, welche sowohl generatorisch als auch elektromotorisch betreibbar ist. Zwischen den elektrischen Maschinen und den jeweiligen Arbeits- oder Kraftmaschinen ist jeweils ein schaltbares Kupplungselement angeordnet, welches es ermöglicht, eine mechanische Verbindung zwischen der elektrischen Maschine und dem Verdichter oder der Gasturbogruppe respektive der Entspannungsmaschine herzustellen. Damit wird eine elektrische Maschine während des Leistungsbetriebes der Kraftwerksanlage mit der Gasturbogruppe respektive der Entspannungsmaschine verbunden und generatorisch betrieben. Die Verbindung zum jeweiligen Kompressor ist dabei getrennt. Im Ladebetrieb der Kraftwerksanlage wird die Verbindung mit der Gasturbogruppe respektive der Entspannungsmaschine getrennt, und es wird eine Verbindung mit einem Kompressor hergestellt; die elektrische Maschine wird dann zum Antrieb eines Kompressors elektromotorisch betrieben. Beide elektrischen Maschinen können also gemäss der Erfindung sowohl im Leistungsbetrieb als auch im Ladebetrieb der Luftspeicheranlage betrieben und genutzt werden.

Gemäss einer ersten Ausführungsform der Erfindung sind ein erster Kompressor, welcher auf dem ersten Wellenstrang angeordnet ist, und ein zweiter Kompressor, welcher auf dem zweiten Wellenstrang angeordnet ist, strömungsmässig parallel geschaltet, derart, dass beide Kompressoren Umgebungsluft ansaugen und beide Kompressoren in ein gemeinsames Speichervolumen fördern. Gemäss einer zweiten Ausführungsform der Erfindung sind der erste und der zweite Kompressor strömungsmässig in Reihe geschaltet, derart, dass einer der Kompressoren ein teilverdichtetes Fluid zu dem anderen Kompressor fördert; der andere Kompressor verdichtet das Fluid weiter, und fördert das vollständig verdichtete Fluid in das Speichervolumen. Mit Vorteil ist bei der zweiten Ausführungsform zwischen den beiden Kompressoren ein Kühler für das teilverdichtete Fluid angeordnet. Die erste Ausführungsform hat den Vorteil, dass die Kompressoren unabhängig voneinander betrieben werden können, woraus eine überlegene Flexibilität im Ladebetrieb resultiert: Es ist nämlich ohne weiteres möglich, nur einen Teil der Verdichterleistung zu nutzen und damit im Ladebetrieb die Leistungsaufnahme zu begrenzen. Die zweite Ausführungsform hat den Vorteil, dass der Druckaufbau auf die beiden Kompressoren verteilt werden kann, derart, dass jeder der Kompressoren ein geringeres Druckverhältnis verarbeiten muss.

Mit grösstem Vorteil umfasst die erfindungsgemässe Kraftwerksanlage eine Wärmezuführeinrichtung, die im Strömungsweg von dem Speichervolumen zur Entspannungsmaschine angeordnet ist, und die Zufuhr von Wärme zu dem der Entspannungsmaschine zuströmenden Speicherfluid ermöglicht. In einer Ausführungsform der Erfindung ist diese Wärmezuführeinrichtung ein Abgaswärmetauscher der Gasturbogruppe, in dem Abgaswärme der Gasturbogruppe nutzbringend auf das Speicherfluid übertragen wird. Dies bedingt jedoch ohne weitere Maßnahmen beinahe zwingend den jeweils gleichzeitigen Betrieb der Gasturbogruppe und der Entspannungsmaschine. Daher wird auch eine alternative Ausführungsform der Erfindung vorgeschlagen, bei der im Strömungsweg vom Speichervolumen zur Entspannungsmaschine eine von der Gasturbogruppe unabhängige Wärmezuführeinrichtung angeordnet ist. Diese unabhängige Wärmezuführeinrichtung ist in einer Weiterbildung der Erfindung als unmittelbar im Strömungsweg angeordnete Feuerungseinrichtung ausgeführt. In einer zweiten Weiterbildung der Erfindung ist die unabhängige Wärmezuführeinrichtung als Wärmetauscher mit einer externen Feuerungseinrichtung ausgebildet. Ein wesentlicher Vorteil der ersten Ausführungsform ist hierbei der geringe apparative Aufwand. Nachteilig ist, dass die Entspannungsmaschine mit aggressiven Rauchgasen beaufschlagt wird. Hier liegt trotz des größeren apparativen Aufwandes ein wesentlicher Vorteil der Ausführungsform mit einer indirekten Feuerung: Die Entspannungsmaschine wird nicht mit aggressiven Verbrennungsgasen beaufschlagt, und es ist daher möglich, eine vergleichsweise einfache und billige Maschine einzusetzen, wie beispielsweise eine serienmäßige Dampfturbine, welche für diese Verwendung nur geringer Änderungen bedarf. Weiterhin ermöglicht eine indirekte Feuerung, das Speicherfluid in der Entspannungsmaschine so weit zu entspannen, dass die Austrittstemperatur des Speicherfluides aus der Entspannungsmaschine bis auf Umgebungstemperatur oder sogar darunter abfällt, was mit geringsten Abströmungs-Wärmeverlusten einhergeht. Dies ist möglich, weil nicht auf die Unterschreitung des Taupunktes von aggressiven Rauchgaskomponenten Rücksicht genommen werden muss. Wenn hingegen eine direkte Feuerung verwendet wird, so muss eine Entspannungsmaschine gewählt werden, welche gegen aggressive Rauchgase beständig ist, was letztlich wesentlich teurere Komponenten zur Erzielung der gleichen Lebensdauer erfordert. Auch muss dann dafür Sorge getragen werden, dass die Temperatur des Arbeitsfluides beim Austritt aus der Entspannungsmaschine nicht unter den Taupunkt der Rauchgaskomponenten fällt, weil ansonsten schwerwiegende Korrosionsschäden auftreten. Die Austrittstemperatur aus der Entspannungsmaschine liegt dann beispielsweise über 130 °C, woraus im Vergleich erhöhte Abgas-Wärmeverluste resultieren.

Die hier anzuordnende Wärmezuführvorrichtung eignet sich besonders gut zur Nutzung von Niedertemperaturwärme, wie beispielsweise Solarwärme oder sonstiger auf niedrigem Temperaturniveau anfallender Wärme, da das zuströmende Speicherfluid sich auf niedriger Temperatur befindet.

In einer bevorzugten Ausführungsform der Erfindung ist die auf einem Wellenstrang in Form der Gasturbogruppe oder der Entspannungsmaschine angeordnete Antriebsleistung grösser als oder wenigstens gleich gross wie die Leistung des auf dem selben Wellenstrangs angeordneten Kompressors. Dies resultiert in einer bestmöglichen Anpassung der Leistungsgrösse der elektrischen Maschine wie auch der notwendigen elektrischen Ausrüstung, wie zum Beispiel Transformatoren, Schalteinheiten, und Anfahrvorrichtungen, sowohl für den generatorischen als auch für den elektromotorischen Betrieb der elektrischen Maschine.

Vorzugsweise sind die Kompressoren derart bemessen, dass sie in der Lage sind, mit Druckverhältnissen über 50 und insbesondere grösser als 100 betrieben zu werden. Das heißt, bei Norm-Umgebungsbedingungen beträgt der Druck des gespeicherten Fluides mehr als 50 und insbesondere mehr als 100 bar. In einer bevorzugten Ausführungsform der Erfindung beträgt die gesamte Verdichterleistung der beiden Kompressoren zusammen mehr als 100 MW und insbesondere mehr als 120 MW, beispielsweise 150 bis 200 MW. Die auf einem einzelnen Wellenstrang installierte Kompressorleistung liegt bevorzugt unterhalb von rund 115 bis 120 MW, beispielsweise bei 50 bis 110 MW.

Weitere vorteilhafte Ausführungsformen und Betriebsweisen der erfindungsgemässen Kraftwerksanlage erschließen sich dem Fachmann im Lichte der nachfolgend dargestellten Ausführungsbeispiele und der Unteransprüche.

### Kurze Beschreibung der Zeichnung

Nachfolgend wird die Erfindung anhand von in der Zeichnung illustrierten Ausführungsbeispielen näher erläutert. Im Einzelnen zeigen

Figur 1 eine erste erfindungsgemässe Kraftwerksanlage;

Figur 2 ein zweites Ausführungsbeispiel für eine erfindungsgemässe Kraftwerksanlage; und

Figur 3 ein weiteres Beispiel für eine vorteilhafte Ausgestaltung einer erfindungsgemässen Kraftwerksanlage.

Die Ausführungsbeispiele und die Zeichnung sind rein instruktiv zu verstehen und sollen nicht zur Einschränkung der in den Patentansprüchen gekennzeichneten Erfindung herangezogen werden.

### Wege zur Ausführung der Erfindung

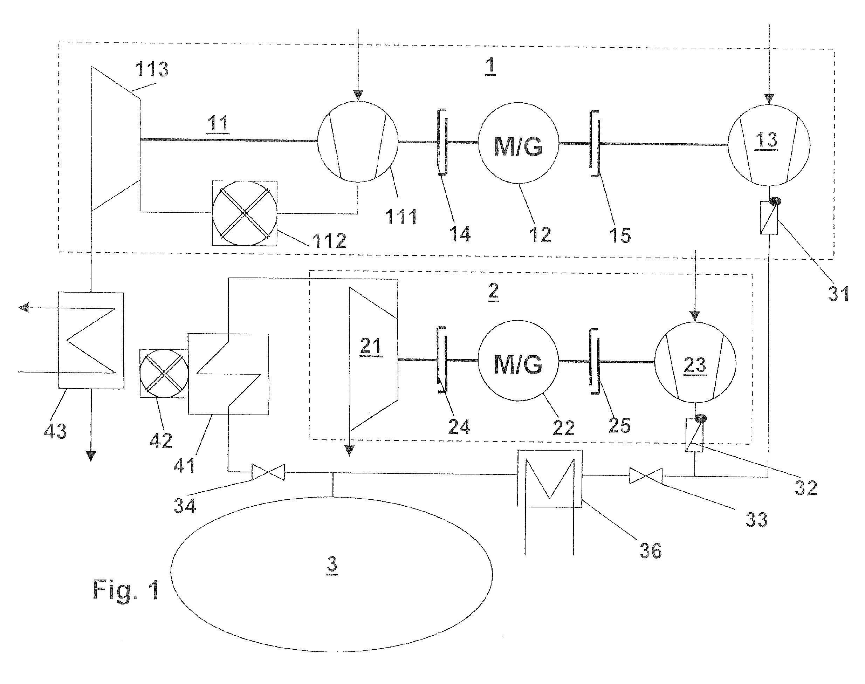

Ein erstes Ausführungsbeispiel einer erfindungsgemässen Kraftwerksanlage ist in der Figur 1 dargestellt. Die Kraftwerksanlage umfasst einen ersten Wellenstrang 1 und einen zweiten Wellenstrang 2. Auf dem ersten Wellenstrang 1 ist eine Gasturbogruppe 11 sowie ein Kompressor 13 angeordnet. Die Gasturbogruppe und der Kompressor sind an den beiden Enden des Wellenstrangs angeordnet. Zwischen der Gasturbogruppe 11 und dem Kompressor 13 ist eine elektrische Maschine 12 angeordnet, welche sowohl elektromotorisch als auch generatorisch betreibbar ist. Schaltbare Kupplungselemente 14 und 15 ermöglichen es, die elektrische Maschine wahlweise mit der Gasturbogruppe 11 und dem Kompressor 13 mechanisch zu verbinden. Die Gasturbogruppe 11 ist vorliegend als eine einfache, dem Fachmann ohne weiteres geläufige Gasturbogruppe dargestellt. Sie umfasst einen Verdichter 111, eine Brennkammer 112, sowie eine Turbine 113. Selbstverständlich kann hier auch eine andere Bauart einer Gasturbogruppe Verwendung finden, beispielsweise eine Gasturbogruppe mit sequenzieller Verbrennung, wie sie zum Beispiel aus EP 0 620 362 bekannt ist. Auf dem zweiten Wellenstrang 2 sind an den beiden Enden des Wellenstrangs eine Entspannungsmaschine 21 und ein Kompressor 23 angeordnet. Zwischen der Entspannungsmaschine und dem Kompressor ist eine sowohl generatorisch als auch elektromotorisch betreibbare elektrische Maschine 22 angeordnet. Mittels der Kupplungselemente 24 und 25 ist die elektrische Maschine wahlweise mit der Entspannungsmaschine 21 und dem Kompressor 23 mechanisch koppelbar. Die Kompressoren 13 und 23 sind vorliegend als einfache Turbokompressoren dargestellt; ohne Einschränkung der Erfindung können die Verdichter auch eine Zwischenkühlung aufweisen, oder es können mehrere in Reihe geschaltete Verdichter mit oder ohne strömungsmässig zwischengeordneten Kühlern auf einem Wellenstrang angeordnet sein. Ebenso kann selbstverständlich innerhalb eines Wellenstrangs zwischen der elektrischen Maschine und dem Kompressor und/oder der Entspannungsmaschine respektive der Gasturbogruppe auf dem Fachmann an sich bekannte Weise ein im vorliegenden Ausführungsbeispiel nicht dargestelltes Übersetzungs- oder Untersetzungsgetriebe angeordnet sein, derart, dass die Drehzahl der Kraft- oder Arbeitsmaschine von der Drehzahl der elektrischen Maschine verschieden ist. Speziell in Zeiten hohen Energiebedarfes wird die Kraftwerksanlage im Leistungsbetrieb betrieben. Dabei ist wenigstens eines der Kupplungselemente 14, 24 geschlossen, die entsprechende mechanische Verbindung ist also hergestellt; die Kupplungselemente 15 und 25 sind geöffnet, die entsprechende mechanische Verbindung ist also getrennt. Zum Antrieb der elektrischen Maschine 12 wird die Gasturbogruppe 11 auf an sich bekannte Weise betrieben. Im Strömungsweg der Gasturbogruppe 11 ist stromab der Turbine 113 beispielsweise ein dem Fachmann an sich geläufiger Abhitzedampferzeuger 43 angeordnet. Die Anordnung des Abhitzedampferzeugers 43 ist fakultativ und an sich nicht erfindungsrelevant. In dem Abhitzedampferzeuger 43 wird auf an sich bekannte Weise mittels der in den Abgasen der Gasturbogruppe enthaltenen Restenergie Dampf erzeugt, welcher auf wiederum an sich bekannte Weise zum Antrieb einer Dampfturbine oder zu sonstigen Prozesszwecken verwendet werden kann. Es ist weiterhin auch bekannt, den dort erzeugten Dampf in die Gasturbogruppe einzuleiten und in der Turbine der Gasturbogruppe arbeitsleistend zu entspannen. Zum Antrieb der elektrischen Maschine 22 wird die Entspannungsmaschine 21 betrieben. Ein in dem Speichervolumen 3 unter Druck gespeichertes Speicherfluid wird über das Stellorgan 34 zur Entspannungsmaschine 21 geleitet und dort arbeitsleistend entspannt. Das Speicherfluid durchströmt auf dem Wege vom Speichervolumen 3 zur Entspannungsmaschine 21 eine Wärmezuführeinrichtung und wird dabei erwärmt. Die Wärmezuführeinrichtung ist vorliegend als Wärmeübertrager 41 mit einer externen Feuerungseinrichtung 42 dargestellt. Die Vorteile, die sich aus dieser Anordnung gegenüber einer unmittelbaren Feuerung des Speicherfluides ergeben, sind oben bereits dargelegt worden. Der Wärmeübertrager 41 eignet sich im Übrigen besonders gut zur Nutzung von Niedertemperaturwärme, wie beispielsweise Solarwärme oder sonstiger auf niedrigem Temperaturniveau anfallender Wärme, da das zuströmende Speicherfluid sich auf niedriger Temperatur befindet, und im Allgemeinen keine hohe Zuströmtemperatur für die Entspannungsmaschine 21 erforderlich ist. Im Gegenteil ist es von Vorteil, die Temperatur am Eintritt der Entspannungsmaschine 21 zu begrenzen, beispielsweise auf eine Temperatur von weniger als 500 °C oder weniger als 550 °C. Dies erleichtert ebenfalls die Verwendung handelsüblicher preisgünstiger Entspannungsmaschinen, wie beispielsweise Dampfturbinen, welche nicht für extrem hohe Eintrittstemperaturen ausgelegt sind. Aufgrund der Begrenzung der Eintrittstemperatur kann auf die Verwendung von teuren und aufwändig zu bearbeitenden hochtemperaturbeständigen Werkstoffen verzichtet werden. Die Erwärmung des Speicherfluides vorgängig der Entspannung in der Entspannungsmaschine 21 erhöht das massenspezifische Enthalpiegefälle des Speicherfluides, wodurch sich die erzielbare Leistungsausbeute mit dem im Speichervolumen 3 gespeicherten Speicherfluid erhöht. In Zeiten hoher Energieverfügbarkeit und eines entsprechenden niedrigen Strompreises, beispielsweise über Nacht, wird die Kraftwerksanlage im Ladebetrieb betrieben. Dabei fördert wenigstens einer der Kompressoren 13 und 23 ein komprimiertes Speicherfluid zum Speichervolumen 3. Das Stellorgan 34 ist geschlossen und das Stellorgan 33 geöffnet. Die Kompressoren 13 und 23 können einzeln betrieben werden. Dies ermöglicht eine günstige Stufung der Leistungsaufnahme der Kraftwerksanlage im Ladebetrieb. Eine eine besonders vorteilhafte Regelungsmöglichkeit ergibt sich, wenn die Kompressoren 13 und 23 unterschiedliche Nennleistungen aufweisen. Wenn beispielsweise einer der Kompressoren die doppelte Leistung aufweist wie der andere, so ist es möglich, die Leistungsaufnahme der Kraftwerksanlage im Verhältnis 1: 2: 3 zu verändern, wobei die Kompressoren jeweils im Nennbetriebspunkt arbeiten. Stromab der Kompressoren sind Rückschlagorgane 31 und 32 angeordnet, welche ein Rückströmen von Fluid durch die Kompressoren verhindern. Vorzugsweise fördern und komprimieren die Kompressoren 13 und 23 Umgebungsluft, die unter Druck im Speichervolumen 3 gespeichert wird. Stromab der Kompressoren 13, 23 und stromauf des Speichervolumens 3 ist gemäss einer bevorzugten Ausführungsform der Erfindung ein Kühler 36 angeordnet. Mittels des Kühlers 36 kann das während der weitgehend adiabaten Kompression erwärmte Fluid heruntergekühlt werden, bevor es dem Speichervolumen 3 zugeführt wird. Zum Ladebetrieb ist wenigstens eines der Kupplungselemente 15 und 25 geschlossen, und die Kupplungselemente 14 und 24 sind geöffnet. Wenigstens eine der elektrischen Maschinen 12 und 22 wird elektromotorisch betrieben und treibt einen Kompressor 13, 23 an, wodurch das Speichervolumen 3 mit Speicherfluid aufgeladen wird, welches danach wieder zur arbeitsleistenden Entspannung in der Entspannungsmaschine 21 zur Verfügung steht.

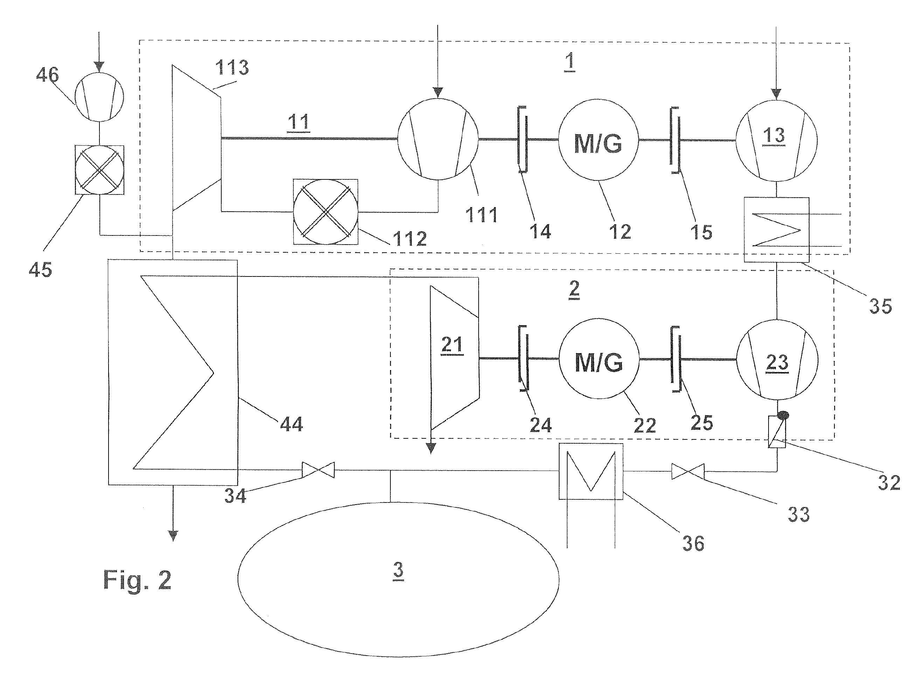

Eine weitere Ausführungsform der Erfindung ist in Figur 2 dargestellt. Ebenso wie die in der Figur 1 dargestellte Kraftwerksanlage umfasst auch die in Figur 2 dargestellte Kraftwerksanlage zwei Wellenstränge 1 und 2, auf denen jeweils eine elektrische Maschine 12, 22, ein Kompressor 13, 23 sowie eine Gasturbogruppe 11 respektive eine Speicherfluid-Entspannungsmaschine 21 angeordnet sind. Im Gegensatz zu der in Figur 1 dargestellten Kraftwerksanlage sind die Kompressoren 13 und 23 strömungsmässig nicht parallel geschaltet, sondern in Reihe, derart, dass vom Kompressor 13 verdichtetes Fluid zum Kompressor 23 strömt, und von diesem weiterverdichtet wird. Stromab des Kompressors 13 und stromauf des Kompressors 23 ist ein Kühler 35 für das vom Kompressor 13 teilverdichtete Fluid angeordnet. Stromab des Kompressors 23 ist ein weiterer Kühler 36 zur Kühlung des verdichteten Fluids angeordnet. Im Abgasströmungsweg der Gasturbogruppe 11 ist in der dargestellten Ausführungsform ein Abgaswärmetauscher 44 angeordnet. Der Abgaswärmetauscher 44 wird primärseitig, auf der wärmeabgebenden Seite, vom Abgas der Gasturbogruppe durchströmt. Beim Leistungsbetrieb der Speicherfluid-Entspannungsmaschine 21 wird Speicherfluid aus dem Speichervolumen 3 über das Stellorgan 34 im Gegenstrom zu den Abgasen der Gasturbogruppe durch den Abgaswärmetauscher 44 geleitet; dabei nimmt das Speicherfluid Wärme aus den Abgasen auf, wird dabei erwärmt, und das erwärmte Speicherfluid wird arbeitsleistend in der Speicherfluid-Entspannungsmaschine entspannt. Die so maximal erzielbare Temperatur des Speicherfluids entspricht im Wesentlichen der Temperatur des Abgases beim Austritt aus der Turbine 113 der Gasturbogruppe 11. Diese liegt bei modernen Gasturbogruppen typischerweise im Bereich um 550 °C, und stimmt in nahezu perfekter Weise mit der zulässigen Eintrittstemperatur der Druckspeicherentspannungsmaschine 21 überein. Der Betrieb der Kraftwerksanlage in Figur 2 erfolgt an sich vollkommen analog zu dem in Figur 1 dargestellten und oben erläuterten Ausführungsbeispiel. Im Leistungsbetrieb der Kraftwerksanlage werden die elektrischen Maschinen 12 und/oder 22 generatorisch betrieben. Dabei sind die Kupplungen 14 und/oder 24 geschlossen, die Kupplungen 15 und 25 sind geöffnet, und die elektrischen Maschinen werden von den Kraftmaschinen 11 und/oder 21 angetrieben. Beim Betrieb der Speicherfluid-Entspannungsmaschine 21 wird das Speichervolumen 3 entleert. Im Ladebetrieb der Kraftwerksanlage werden die elektrischen Maschinen 12 und 22 elektromotorisch betrieben. Dabei sind die Kupplungen 14 und 24 geöffnet, und die Kupplungen 15 und 25 stellen eine Verbindung der elektrischen Maschinen mit den Kompressoren 13 und 23 her. Aufgrund der Reihenschaltung der Kompressoren 13 und 23 können die Kompressoren der beiden Wellenstränge nicht unabhängig voneinander betrieben werden. Das heisst, der Betrieb eines der Kompressoren bedingt auch den Betrieb des anderen Kompressors. Beim Betrieb der Kompressoren wird das Speichervolumen 3 mit Druckspeicherfluid aufgeladen, welches danach wieder zur arbeitsleistenden Entspannung in der Speicherfluid-Entspannungsmaschine 21 zur Verfügung steht. Sehr zweckmäßig und vorteilhaft wird die Temperatur des Abgases der Gasturbogruppe stromab des Wärmetauschers 44 gemessen, und beispielsweise durch Regeleingriffe auf das Stellorgan 34 der Speicherfluidmassenstrom derart eingestellt, dass der Taupunkt des Abgases nicht unterschritten wird, bzw. eine Sicherheitsmarge zum Taupunkt der Abgase erhalten bleibt. Stromauf des Abgaswärmetauschers 44 oder innerhalb des Abgaswärmetauschers kann eine Zusatzfeuerungseinrichtung angeordnet sein, um dem Speicherfluid eine größere thermische Leistung zur Verfügung zu stellen. In der beispielhaft dargestellten Ausführungsform ist stromauf des Abgaswärmetauschers 44 eine Zusatzfeuerung 45 mit einem Gebläse 46 ausserhalb des Strömungswegs des Abgases der Gasturbogruppe angeordnet. Durch den Betrieb des Gebläses 46 wird Frischluft zur Zusatzfeuerung 45 geleitet, wo ein Brennstoff verbrannt werden kann. Die entstehenden Rauchgase werden durch den Abgaswärmetauscher 44 geleitet, und stehen ebenfalls zur Erwärmung des Speicherfluids im Abgaswärmetauscher 44 zur Verfügung. Die externe Anordnung der Zusatzfeuerung 45 mit einem Frischluftgebläse 46 hat den Vorteil, dass die Speicherfluid-Entspannungsmaschine 21 auch dann mit erwärmtem Speicherfluid betrieben werden kann, wenn die Gasturbogruppe 11 stillsteht. Dies erhöht die Betriebsflexibilität der Kraftwerksanlage erheblich. Weiterhin kann auch ein nicht dargestellter Abgas-Bypass für das Abgas der Gasturbogruppe angeordnet sein, der es ermöglicht, das Abgas der Gasturbogruppe am Abgaswärmetauscher 44 vorbeizuleiten. Dies hat erhebliche Vorteile, wenn, beispielsweise bei vollständig entleertem Speichervolumen 3 die Gasturbogruppe im Stillstand der Speicherfluid-Entspannungsmaschine 21 betrieben werden soll. Es wird dann die thermische Belastung oder Überlastung des sekundärseitig nicht durchströmten Abgaswärmetauschers 44 vermieden.

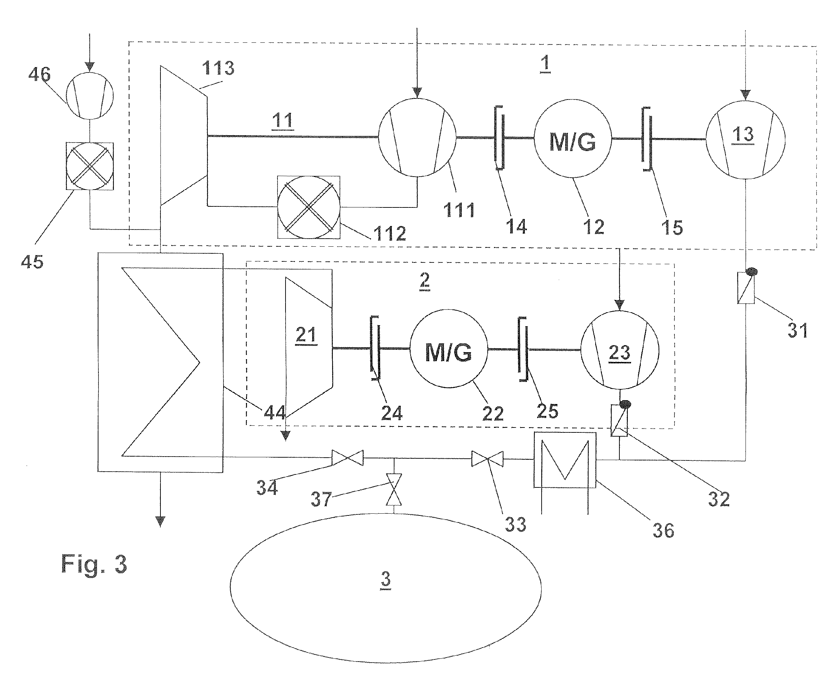

Die in Figur 3 beispielhaft dargestellte erfindungsgemässe Kraftwerksanlage ist hinsichtlich der wärmetechnischen Verschaltung der Gasturbogruppe 11 und der Speicherfluid-Expansionsmaschine 21 identisch aufgebaut wie die in Figur 2 dargestellte Kraftwerksanlage. Die auf den beiden Wellensträngen angeordneten Kompressoren 13 und 23 sind wie im Ausführungsbeispiel der Figur 1 strömungsmässig parallel angeordnet, woraus, wie dargestellt, eine grössere Flexibilität im Betrieb der Kraftwerksanlage resultiert. Am Speichervolumen 3 ist bei dem hier dargestellten Ausführungsbeispiel ein Absperrorgan 37 angeordnet. Dieses Detail erhöht die Betriebsflexibilität wie nachfolgend dargestellt erheblich. Die dargestellte Ausführungsform ermöglicht einen Leistungsbetrieb der Kraftwerksanlage auch bei entleertem Speichervolumen 3. In einem solchen Betrieb stellen die Kupplungen 14 und 24 die Verbindung sowohl der Gasturbogruppe 11 als auch der Expansionsmaschine 21 mit den elektrischen Maschinen 12 und 22 her. Wenigstens eine der Kupplungen 15, 25 stellt die Verbindung einer elektrischen Maschine mit einem der Kompressoren 13, 23 her. In diesem Betriebsmodus ist das Absperrorgan 37 geschlossen, das entleerte oder unzureichend gefüllte Speichervolumen 3 ist also von der Kraftwerksanlage getrennt. Die Stellorgane 33 und 34 sind geöffnet. Von den Kompressoren 13 und/oder 23 geförderte komprimierte Luft wird über den Abgaswärmetauscher 44 zur Entspannungsmaschine 21 geleitet und dort arbeitsleistend entspannt. Im Abgaswärmetauscher 44 wird das Fluid dabei erwärmt. Damit ist es möglich, die Expansionsmaschine auch bei unzureichendem Druck im Speichervolumen zu betreiben. Weiterhin kann die Abgaswärme der Gasturbogruppe 11 vorteilhaft auch bei entleertem Speichervolumen genutzt werden. Die Gasturbogruppe 11 kann also auch dann unproblematisch betrieben werden, wenn kein Fluid aus dem Speichervolumen 3 zur Verfügung steht, und keine Bypassleitung für den Abgaswärmetauscher 44 angeordnet ist. Der Kühler 36 ist in diesem Betriebsmodus mit Vorteil ausser Betrieb.

Die oben dargestellten Ausführungsbeispiele illustrieren einerseits die hohe Betriebsflexibilität der erfindungsgemässen Kraftwerksanlage. Weiterhin wird deutlich, dass die Ausnutzung der eingesetzten Ressourcen weitaus besser ist als bei den aus dem Stand der Technik bekannten Kraftwerksanlagen. Insbesondere kann jede der elektrischen Maschinen sowohl im Leistungsbetrieb als auch im Ladebetrieb der Kraftwerksanlage betrieben werden. Die Gasturbogruppe ermöglicht es, auch dann Leistung zu erzeugen, wenn das Speichervolumen 3 vollständig entleert ist. Im Lichte dieser Ausführungen eröffnen sich dem Fachmann ohne Weiteres weitere mögliche Ausführungsformen der Erfindung. Weitere Einsparungs- und Verbesserungspotenziale eröffnen sich dadurch, dass die elektrischen Maschinen, die auf den beiden Wellensträngen angeordnet sind, eine gemeinsame elektrische Ausrüstung verwenden können. Damit ist für die Kraftwerksanlage mit zwei Wellensträngen beispielsweise nur ein Netzanbindungstransformator, sogenannter " Step-Up-Transformer ", und eine Anfahrvorrichtung, beispielsweise ein statischer Frequenzumrichter, erforderlich. Dies vermindert die Investitionskosten und den Ressourceneinsatz weiter. Auch der Platzbedarf wird erheblich vermindert, weil eine kompaktere Bauweise der gesamten Kraftwerksanlage möglich ist.

### Bezugszeichenliste

1 erster Wellenstrang

2 zweiter Wellenstrang

3 Speichervolumen

11 Gasturbogruppe

12 elektrische Maschine

13 Kompressor, Verdichter, Turboverdichter

14 Kupplungselement, Kupplung

15 Kupplungselement, Kupplung

21 Entspannungsmaschine, Speicherflui-Entspannungsmaschine

22 elektrische Maschine

23 Kompressor, Verdichter, Turboverdichter

24 Kupplungselement, Kupplung

25 Kupplungselement, Kupplung

31 Rückschlagelement, Rückschlagklappe

32 Rückschlagelement, Rückschlagklappe

33 Stellorgan, Ventil

34 Stellorgan, Ventil

35 Kühler

36 Kühler

37 Absperrorgan

41 Wärmeübertrager

42 Feuerungseinrichtung

43 Abhitzedampferzeuger

44 Abgaswärmetauscher

45 Zusatzfeuerung

46 Frischluftgebläse

## Patentansprüche

1. Luftspeicherkraftwerksanlage, mit einem Kompressor-Leistungsaufnahmefähigkeit und einer Generationsleistungsfähigkeit, wobei die Generationsleistungsfähigkeit von einer Gasturbogruppe (11) und einer Entspannungsmaschine (21) für ein Druckspeicherfluid zur Verfügung gestellt wird, wobei die Gasturbogruppe (11) mit einer ersten elektrischen Maschine (12) auf einem ersten Wellenstrang (1) angeordnet ist und die Entspannungsmaschine (21) mit einer zweiten elektrischen Maschine (22) auf einem zweiten Wellenstrang (2) angeordnet ist, **dadurch gekennzeichnet, dass** die Kompressor-Leistungsaufnahmefähigkeit auf einen ersten Kompressor (13) und einen zweiten Kompressor (13) aufgeteilt ist und der erste Kompressor auf dem ersten Wellenstrang und der zweite Kompressor auf dem zweiten Wellenstrang angeordnet ist.

2. Kraftwerksanlage gemäss Anspruch 1, **dadurch gekennzeichnet, dass** die Gasturbogruppe (11) einen Abgaswärmetauscher (44) aufweist, wobei der Abgaswärmetauscher primärseitig vom entspannten Heissgas der Gasturbogruppe durchströmbar ist und sekundärseitig von dem der Entspanungsmaschine (21) zuströmenden Speicherfluid durchströmbar ist.

3. Kraftwerksanlage gemäss einem der vorstehenden Ansprüche, **dadurch gekennzeichnet, dass** der erste Kompressor (13) und der zweite Kompressor (23) strömungsmässig parallel geschaltet sind, derart, dass insbesondere jeder Kompressor Umgebungsluft ansaugt und beide Kompressoren in ein gemeinsames Speichervolumen (3) fördern.

4. Kraftwerksanlage gemäss einem der Ansprüche 1 oder 2, **dadurch gekennzeichnet, dass** die Kompressoren strömungsmässig in Reihe geschaltet sind, derart, dass insbesondere ein Kompressor (13) Luft aus der Umgebung ansaugt, die verdichtete Luft zu dem anderen Kompressor (23) leitet, und dieser die weiterverdichtete Luft in ein Speichervolumen (3) fördert.

5. Kraftwerksanlage gemäss Anspruch 4, **dadurch gekennzeichnet, dass** zwischen den Kompressoren (13, 23) ein Kühler (35) für das teilverdichtete Fluid angeordnet ist.

6. Kraftwerksanlage gemäss einem der vorstehenden Ansprüche, **dadurch gekennzeichnet, dass** eine Wärmezuführeinrichtung (41,42) für der Entspannungsmaschine (21) zuströmendes Speicherfluid angeordnet ist.

7. Kraftwerksanlage gemäss einem der vorstehenden Ansprüchen,**dadurch gekennzeichnet, dass** beide elektrischen Maschinen sowohl elektromotorisch als auch generatorisch betreibbar sind.

8. Kraftwerksanlage gemäss einem der vorstehenden Ansprüche, **dadurch gekennzeichnet, dass** die maximale Leistungsabgabe der Gasturbogruppe grösser als oder wenigstens gleich gross ist wie die maximale Leistungsaufnahme des ersten Kompressors, und, dass die maximale Leistungsabgabe der Entspannungsmaschine grösser als oder wenigstens gleich gross ist wie die maximale Leistungsaufnahme des zweiten Kompressors.

9. Kraftwerksanlage gemäss einem der vorstehenden Ansprüche, **dadurch gekennzeichnet, dass** das maximale Druckverhältnis der Kompression grösser als 50 und insbesondere grösser als 100 ist.

10. Kraftwerksanlage gemäss einem der vorstehenden Ansprüche, **dadurch gekennzeichnet, dass** die gesamte Verdichterleistung des ersten und des zweiten Kompressors zusammen grösser als 100 MW, insbesondere grösser als 120 MW, ist.
